## Europäisches Patentamt

## European Patent Office

## Office européen des brevets

(19)

(11) Publication number: **0 166 465**
**B1**

(12) # EUROPEAN PATENT SPECIFICATION

(45) Date of publication of patent specification: **11.05.88**

(51) Int. Cl.⁴: **B 01 D 29/34,** B 01 D 33/26

(21) Application number: **85200173.4**

(22) Date of filing: **12.02.85**

(54) Disc-shaped filter element.

(30) Priority: **01.03.84 NL 8400662**

(43) Date of publication of application:
**02.01.86 Bulletin 86/01**

(45) Publication of the grant of the patent:
**11.05.88 Bulletin 88/19**

(84) Designated Contracting States:
**AT BE CH DE FR GB IT LI NL SE**

(56) References cited:
**CH-A- 272 824
DE-A-2 144 806
FR-A-1 480 977
GB-A- 177 819
GB-A- 915 341**

(73) Proprietor: **AMAFILTER BV
Kwakelkade 28
Alkmaar (NL)**

(72) Inventor: **Dosoudil, Martin, Dr.-Ing.
de Meeuw 11
NL-1721 DD Broek op Langedijk (NL)**

(74) Representative: **Koomen, Jan, Ir.
Kennemerstraatweg 35
NL-1814 GB Alkmaar (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a disc-shaped filter element, consisting of a hollow boss-member for the discharge of the filtrate, said boss-member carrying a flat disc-shaped supporting member or supporting wire which on both sides is covered by filter gauze, sealed along the periphery of the element and to the boss-member, while the element is divided by radially extending sealing members into more, particularly into three sectors communicating with the space in the boss-member by means of filtrate-outflow-pipes protruding into the space of the boss-member.

Such a disc-shaped filter element is known from the Dutch patent application 7904619 of the applicant firm.

This known filter element is used in a rotation or continuous filtering apparatus in which the filter element rotating about an axis of rotation is directed through a bath of the liquid to be filtered during which the filtrate is directed to the inside of the filter element to be discharged therefrom to the inside of the boss-member.

When leaving the liquid bath the filtrate in the sectors of the element is poured in succession through the respective downwardly directed outflow-pipes into the space in the inside of the boss-member to be discharged therefrom through the channel formed by the joint boss-members situated in abutting relationship upon the shaft of rotation carrying the filter elements.

The filtrate in the boss-member only can flow through those outflow-pipes and into the respective sectors, as far as these outflow-pipes remain underneath the liquid level in the boss-member.

In this known filter element, the sealing members radially extending between both filter faces of the filter element are made up as rigid spokes to which the filter gauze is fastened.

This construction has the disadvantage, that the movability of the filter gauze is low which hinders the removal of the filter-cake from the gauze by the conventional blow-back.

Also the gauze is weakened along the rigid sealing members due to the considerable forces arising during each blow-back so that, in the long run, it will be torn free from the sealing members.

It is an object of the present invention to obviate these disadvantages of the known filter element.

According to the invention the filter element thereto is characterized in that the sealing members are formed by elastic strips of material, which strips are attached to the filter gauze by means of lips which penetrate the filter gauze and thus are adhered thereto.

By using elastic sealing members an increased movability of the filter gauze is obtained, so that the gauze by a blow-back to remove the filter-cake from the gauze may easily deform causing the cake to break loose from the gauze.

In a favourable manner the attaching lips of the radial sealing members extend, according to a feature of the invented filter element, in opposite directions by which the movability of the filter gauze faces of the filter element is further increased.

In a favourable embodiment of the invented filter element the section of a radial sealing member comprises a web portion extending radially between both filter gauze faces and adjoining strip-shaped lips to an —H— form of which two, diametrically opposed lips as attaching lips are attached to the filter gauze faces, while other lips are loosely lying against the filter gauze, such, that on both sides of the radial sealing member a gutter-shaped channel is formed of which the open side is directed to the inside of the adjoining sector of the filter element.

In a favourable manner the sealing along the outer periphery of the filter element according to the invention is provided at its inner side with a gutter-shaped channel, which at the place of the radial sealing members is interrupted to adjoin there the gutter-shaped channels formed along the sides of the radial sealing members.

So, in this embodiment of the invention, a gutter-shaped channel is present along the periphery of each sector of the filter element, the open side of said channel being directed to the inside of the sector, and in which channel filtrate remainders may be collected to be discharged from the channel through the filtrate-outflow-pipes into the hollow boss-member of the filter element.

An embodiment of the invention will now be described by way of example with reference to the accompanying drawings in which:

Fig. 1 is a side view of the filter element according to the invention;

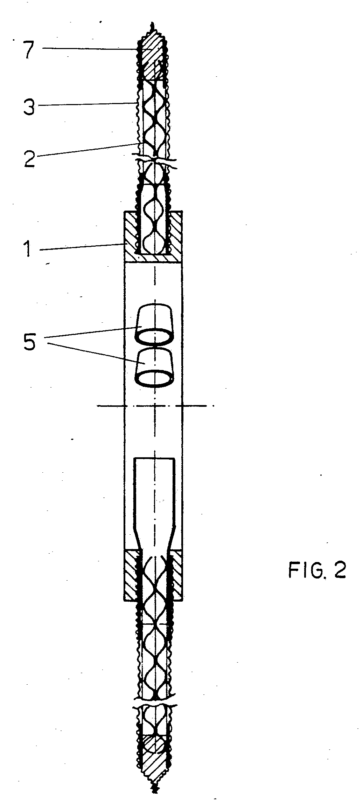

Fig. 2 is a section according to line A—A of Fig. 1;

Fig. 3, 4 and 5 are sections according to respectively lines B—B, C—C and D—D of Fig. 1.

As is shown in the drawing, the disc-shaped filter element consists of a hollow boss-member 1, intended for the discharge of the filtrate, onto which a disc-shaped supporting wiring 2 is mounted, of which both sides are covered by the filter gauze 3. The element is divided by three, radially extending sealing members 4 into three sectors, which by means of filtrate-outflow-pipes 5, extending along both sides of the sealing members and protruding into the hollow boss-member, thereto are connected.

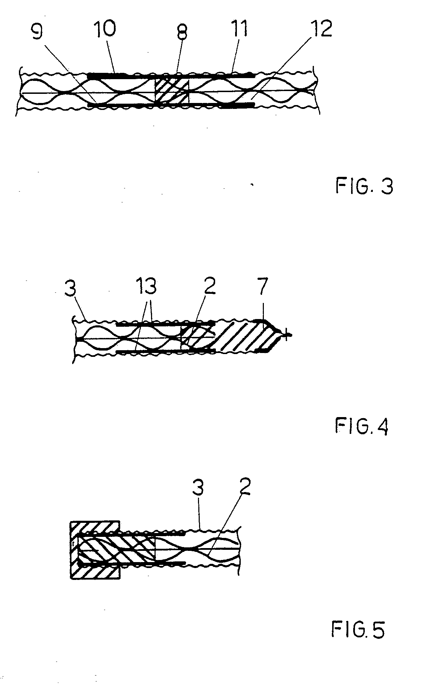

As well as along its boss-member as along its outer periphery the filter element is provided with a rubber sealing 6 and 7 completely filling up there the space in the supporting wiring and between both filter gauze faces, as is shown in Fig. 4 and Fig. 5.

The radially extending sealing members each are formed by a web portion 8 extending between both filter gauze faces and adjoining the strip-shaped lips 9, 10, 11 and 12 to an —H— form, and of which lips the lips 10 and 12 are fastened to the filter gauze, thereby filling up the interstices of the gauze, while the lips 9 and 11 are freely lying against the filter gauze and forming with the lips 10 and 12 a gutter-shaped channel.

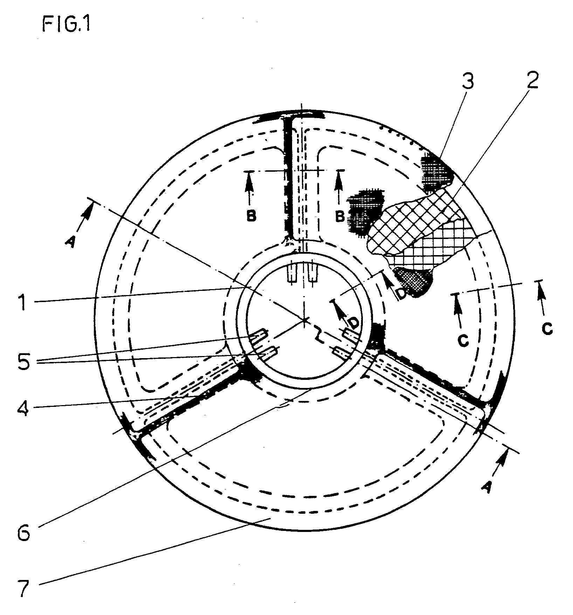

As is shown in Fig. 1 and Fig. 4, the sealing along the periphery of the filter element forms by means of the lips 13, freely lying against the filter gauze, a channel which is interrupted at the radially extending sealing members to adjoin the gutter-shaped channels on both sides thereof. By using gutter-shaped channels on both sides of each radial sealing member and along the periphery of the filter element in combination with the filtrate-outflow-pipes directed according to the radial gutter-shaped channel it is achieved that, when the filter-cake is blown dry, the filtrate remainders will be collected into the channels to be discharged therefrom through the outflow-pipes into the inside of the boss-member of the filter element.

## Claims

1. Disc-shaped filter element, comprising a hollow boss-member (1) through which the filtrate is to be discharged, and onto which a flat, disc-shaped supporting member or supporting wire (2) is mounted, which on both sides is covered by filter gauze (3), sealed along the periphery of the element and to the boss-member, while the element is divided by radially extending sealing members (4) into more, particularly three sectors, which by means of filtrate-outflow-pipes (5) protruding into the boss-member communicate therewith, characterized in that the sealing members are formed by elastic strips (9, 10, 11, 12) of material, extending between both filter gauze faces, which strips are attached to the filter gauze by means of lips (10, 12) which penetrate the filter gauze and thus are adhered thereto.

2. Disc-shaped filter element as claimed in claim 1, characterized in that the attaching lips extend in opposite directions.

3. Disc-shaped filter element as claimed in claim 1 or 2, characterized in that the section of a radial sealing member is formed by a web portion (8) extending between both filter gauze faces and adjoining strip-shaped lips to an —H— form, of which two, diametrically opposed lips (10, 12) as attaching lips are fastened to the filter gauze faces, while both other lips (9, 11) are loosely lying against the filter gauze, such that a gutter-shaped channel is formed on both sides of the radial sealing member.

4. Disc-shaped filter element as claimed in claim 1, 2, or 3, characterized in that the sealing along the periphery of the element at its inner side is provided with a gutter-shaped channel, which is interrupted at the radial sealing members to adjoin there the gutter-shaped channels along the radial sealing members.

5. Disc-shaped filter element according to one of the preceding claims, characterized in that the filtrate-outflow-pipes are directed along the radial sealing members.

## Patentansprüche

1. Scheibefoermiges Filterelement, umfassend ein hohles Nabelteil (1) wodurch das Filtrat abgefuehrt werden kann, und worauf ein flaches scheibefoermiges Stuetzelement oder Stuetzgewebe (2) ist angebracht, das auf beiden Seiten abgedeckt ist durch Filtergewebe (3), das entlang dem Umriss des Elementes und am Nabenteil abgedichtet ist, waehrend das Element verteilt ist durch radial verlaufende Abdichtelemente (4) in mehrere, insbesondere drei sektoren, welche mittels Filtratabfuhrroehre (5), die in das Nabenteil hervorragen und damit in Verbindung stehen, dadurch gekennzeichnet, dass die Abdichtelemente gebildet werden durch elastische Materialstreifen (9, 10, 11, 12) welche sich zwischen den beiden Filtergewebeflaechen erstrecken en welche Streifen an das Filtergewebe befestigt sind mittels Lippen (10, 12), welche in das Filtergewebe eindringen und als daran fesgeheftet sind.

2. Scheibefoermiges Filterelement nach Anspruch 1, dadurch gekennzeichnet, dass die Befestigungslippen sich entgegengesetzt hinsichtlich einander erstrecken.

3. Scheibefoermiges Filterelement nach Anspruch 1 oder 2, dadurch gekennzeichnet, dass der Durchschnitt eines radialen Abdichtelementes gebildet wird durch ein Stegteil (8), das zwischen den beiden Filtergewebeflaechen verlaeuft und anschliesst auf streifenfoermigen Lippen zu einer —H— Form, von der zwei, diametral gegenueber einander gelegen Lippen (10, 12) als Befestigungslippen an das Filtergewebe befestigt sind, waehrend die beiden anderen Lippen (9, 11) lose anliegen gegen das Filtergewebe, derart, dass ein rinnefoermiges Kanal gebildet ist auf beiden Seiten des radialen Abdichtelementes.

4. Scheibefoermiges Filterelement nach Anspruch 1, 2 oder 3, dadurch gekennzeichnet, dass die Abdichtung entlang dem Umriss des Elementes an der Innenseite versehenge ist, mit einem rinnefoermigen Kanal, der unterbrochen wird zur Stelle der radialen Abdichtelemente und dort anschliesst auf die rinnefoermigen Kanaele entlang der radialen Abdichtelementen.

5. Scheibefoermiges Filterelement nach einem der vorangehenden Ansprüche, dadurch gekennzeichnet, dass die Filtratabfuhrroehre laengs der radialen Abdichtelemente gerichtet sind.

## Revendications

1. Elément filtrant en forme de disque, comportant un moyeu creux (1) à travers lequel est prévue l'évacuation du filtrat et qui sert de support à une monture plate en forme de disque, faite de toile métallique (2), dont les deux faces sont recouvertes de tissu filtrant (3) et pourvue d'un joint d'étancheité le long de sa périphérie et autour du moyeu, ledit élément filtrant comportant des barrettes radiales (4) qui le divisent de façon étanche en plusieurs secteurs, de préférence en trois secteurs, qui communiquent avec la cavité du moyeu grâce à des tubes d'écoulement (5) du filtrat qui débouchent en saillie dans le moyeu, cet élément filtrant étant caractérisé en ce que les barrettes d'étanchéité sont constituées par des bandes (9, 10, 11, 12) de matière élastique, qui s'étendent entre les deux faces de tissu filtrant, et qui y sont fixées au moyen de lèvres (10, 12) qui pénètrent dans ledit tissu filtrant et s'y trouvent ainsi retenues.

2. Elément filtrant selon la revendication 1, caractérisé en ce que les lèvres de fixations (10, 12) s'étendent dans des directions opposées.

3. Elément filtrant selon l'une des revendications 1 ou 2, caractérisé en ce que chaque barrette d'étanchéité radiale comporte un corps (8) qui s'étend entre les deux faces de tissu filtrant et des lèvres contiguës en forme de languettes qui présentent une configuration en H, deux de ces lèvres (10, 12) s'étendant en sens opposés constituant des lèvres de fixation attachées aux faces de tissu filtrant, tandis que les deux autres lèvres (9, 11) appuient librement contre le tissu filtrant, de manière à réaliser un profil en forme de gouttière sur les deux côtés de la barrette d'étanchéité radiale.

4. Elément filtrant selon l'une des revendications 1 à 3, caractérisé en ce que l'étanchéité est réalisée à la périphérie et du côté intérieur de cet élément au moyen d'un profil en forme de gouttière, qui est interrompu à l'endroit de chaque barrette radiale d'étanchéité pour se raccorder aux profils en forme de gouttières qui existent le long de chacun des côtés de la barrette considérée.

5. Elément filtrant selon l'une des revendications 1 à 4, caractérisé en ce que les tubes prévus pour l'écoulement du filtrat sont orientés dans le sens de la longueur des barrettes d'étanchéité.

FIG.1

0 166 465

FIG. 2

2

FIG. 3

FIG. 4

FIG. 5